Europäisches Patentamt

European Patent Office

Office européen des brevets

(19)

(11) Publication number: **0 211 694 B1**

# EUROPEAN PATENT SPECIFICATION

(45) Date of publication of patent specification: **10.04.91**    (51) Int. Cl.⁵: **F23N 5/24, B60H 1/22**

(21) Application number: **86306504.1**

(22) Date of filing: **21.08.86**

(54) Heater control system.

(30) Priority: **23.08.85 JP 185594/85**

(43) Date of publication of application:
**25.02.87 Bulletin 87/09**

(45) Publication of the grant of the patent:
**10.04.91 Bulletin 91/15**

(84) Designated Contracting States:
**DE FR GB IT SE**

(56) References cited:
**US-A- 2 973 033**
**US-A- 3 362 637**
**US-A- 4 099 488**

(73) Proprietor: **Isuzu Motors Limited**
**6-22-10 Minamiooi Shinagawa-ku**
**Tokyo 140(JP)**

(72) Inventor: **Kawamura, Hideo**
**3129-13 Okada Samukawa-machi**
**Kouza-gun Kanagawa(JP)**

(74) Representative: **Brunner, Michael John et al**
**GILL JENNINGS & EVERY 53-64 Chancery**
**Lane**
**London WC2A 1HN(GB)**

## Description

This invention relates to a heater control system, particularly for controlling the rapid heating of the interior of the passenger compartment of a motor vehicle which is driven by an internal combustion engine. More particularly, the invention relates to a control system for monitoring the operating conditions of various components of a fast-acting heater in order to detect failure of any of those components, and thereby to stop the operation of the heater and/or to issue an alarm.

Various conventional heaters for heating the passenger compartments of motor vehicles have been proposed. In a commonly-used heater design, engine cooling water is extracted from the internal combustion engine through a pipe and is passed through a heater body comprising a heater core and a blower. Air is supplied to the heater body and is heated thereby, and the heated air is delivered into the passenger compartment to heat the interior thereof. Another prior motor vehicle heater includes a burner for burning fuel independently of the internal combustion engine, the heat generated by the burnt fuel being utilized to heat the interior of the compartment.

The type of heater which utilises the engine cooling water is not suitable for quickly heating the interior of the compartment, since it takes a long time to increase the temperature of the cooling water. One problem with a previous heater system in which fuel is burnt independently of the internal combustion engine and the burnt gas is used for heating the interior of the compartment, is that the hot air produced by the burner for heating the compartment interior cannot be controlled as desired. Although the heater is capable of quickly heating the compartment interior, of controlling the hot air, and of heating the compartment interior according to a desired heat setting, it fails to detect and indicate failures of various components of the heater adequately.

It is an object of the present invention to provide a control system for a fast-acting heater for quickly heating, for example, the interior of the passenger compartment of a motor vehicle, the control system being capable of detecting failure of components of the heater, and thereby stopping the operation of the heater and/or operating an alarm.

US-A-4099488 discloses a vehicle heater which employs engine coolant. when the engine is not operation the heater would not normally be operated, and therefore a bypass circuit is connected to the piping for the engine coolant, a coolant heater heating the engine coolant by burning diesel fuel. US-A-2973033 discloses a heater with a preheater for heating a fuel feed tube and also a spark plug for igniting the heated fuel that has been injected into the heater. The system has a safety cut-out switch controlled by a heat responsive switch, an overheat switch, and a combustion air fan failure switch. US-A-3362637 discloses an arrangement for remotely controlling a heater by a radio signal.

According to the invention, there is provided a control system for a fast-acting heater which includes a heating burner in which fuel is atomised in an electrically heated atomiser slow plug, air is mixed with the atomised fuel and the mixture is ignited by an electrical ignition plug so that the mixture is burnt, and a heat exchanger for extracting heat from the burnt mixture, the control system comprising operation sensing means for sensing the operation of the burner and the heat exchanger to generate signals representing the operation; and means for arresting the operation of the heater, if so required, in response to the signals from the operation sensing means; characterised in that the sensing means includes:

means for detecting the electric resistance of the atomizer glow plug or of the ignition plug and generating a signal indicating the detected electric resistance; and

means for determining a fault condition of the atomizer glow plug or of the ignition plug based on the signal from the detecting means and arresting the operation of the heater based on the result of a determination made by the means for determining a fault condition of the atomizer glow plug or of the ignition plug.

An embodiment of the invention will now be described, by way of example, with reference to the accompanying drawings, in which

Fig. 1 is a block diagram of a control system for a fast-acting heater according to the invention; and

Figs. 2A and 2B together form a flowchart of the sequence of operation of the control system.

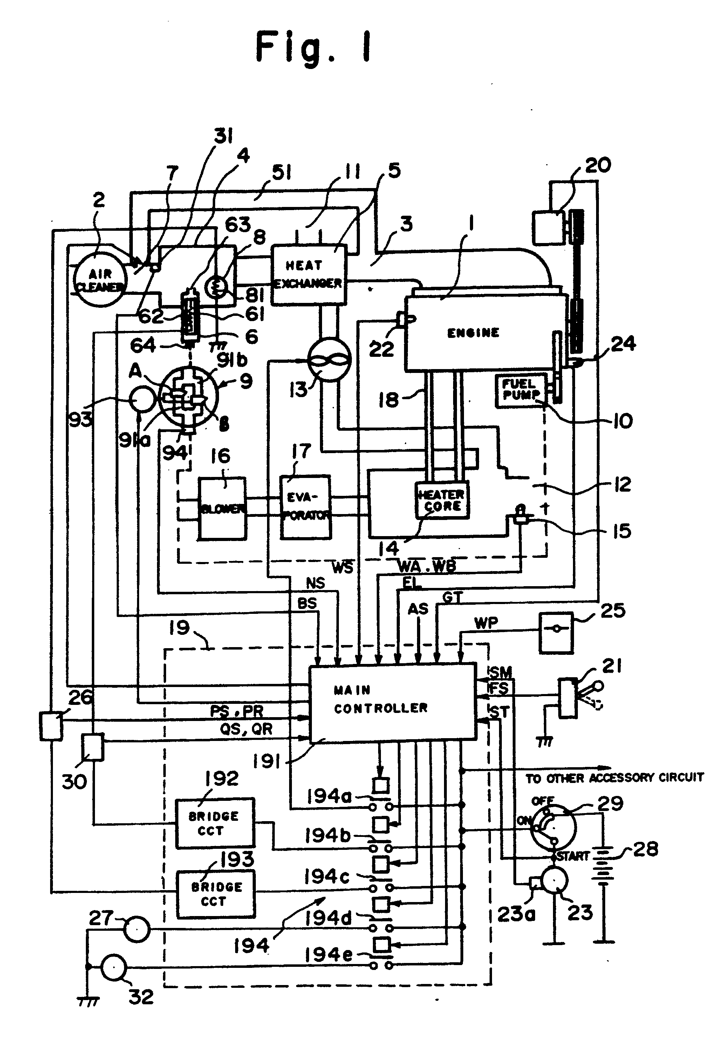

Referring to Fig. 1, an engine 1, which may be a diesel engine or a petrol (gasoline) engine, is associated with a fast heating burner 4 which burns fuel to heat the interior of a passenger compartment. The burner 4 is disposed in an intake pipe 3 serving as an air duct carrying air to the engine from an air cleaner 2. A heat exchanger 5 is connected in the intake pipe 3, downstream of the burner 4 in the direction of air flow through the intake pipe 3. A bypass passage 51 is connected to the intake pipe 3 for supplying air directly to the engine 1 to burn fuel therein.

The burner 4 includes an atomiser 6 for heating fuel to atomise it, a bypass valve 7 for controlling an air inlet port for supplying air to be mixed with atomised fuel into a combustible mixture, and an ignition glow plug 8 for igniting and burning the combustible mixture. The atomiser 6 has a pipe-shaped or rod-shaped atomiser glow plug 61 of a ceramic material for heating the fuel to atomise it. The glow plug 61 includes a central resistor wire 62, having a positive temperature coefficient, for heating the glow plug 61 upon energisation. The ignition glow plug 8 is also in the form of a pipe or rod made of a ceramic material such as silicon nitride ($Si_2NO_4$) and includes a central resistor wire 81 for heating the ignition glow plug 8 upon energisation.

In one end of the atomiser 6, there is defined an ejector hole 63 for injecting fuel, as it is heated and atomised by the atomiser glow plug 61, into the heating burner 4. The other end of the atomiser 6 has a fuel inlet hole 64 communicating with a fuel supply unit 9 having a fuel valve. The bypass valve 7, which serves as means for controlling the air inlet port to supply air to be mixed with atomised fuel, is controlled by a command from a main controller 191, which will be described later. When the bypass valve 7 is fully opened, air to be mixed is not introduced and bypasses the heating burner 4. When the bypass valve 7 is opened to a setting "1", it introduces a predetermined small amount of air. When the bypass valve 7 is opened to a setting "2", it introduces a predetermined medium amount of air, and when it is opened to a setting "3", it introduces a predetermined large amount of air. In the absence of any command from the main controller 191, the bypass valve 7 is opened to the setting "1". A vacuum sensor 31 is disposed downstream of the bypass valve 7 in the direction of air flow and serves as means for detecting a vacuum developed by the operation of the bypass valve 7. The vacuum sensor 31 issues a vacuum-representing signal BS to the main controller 191.

The fuel supply unit 9 which supplies fuel from a fuel pump 10 to the atomiser 6 includes two fuel passages 91a, 91b having fuel valves A, B, respectively, which are openable and closable by a drive source 93. The fuel passage 91b is arranged to supply a greater amount of fuel than the fuel passage 91a. It is possible to open both of the fuel passages 91a, 91b to increase the amount of fuel supplied. A fuel pressure sensor 94, serving as means for detecting the pressure in the fuel path, is disposed in the fuel inlet port of the fuel supply unit 9, the fuel pressure sensor 94 applying a pressure-representing signal NS to the main controller 191.

The heating burner 4 operates as follows: Fuel delivered from the fuel passage 91a or 91b into the atomiser 6 is heated by the atomiser glow plug 61 as the fuel passes through the atomiser, and is then injected as atomised fuel from the jet 63 into the heating burner 4. The atomised fuel is mixed with air coming from the air cleaner 2 through the bypass valve 7 to form a combustible mixture, which is ignited by the ignition glow plug 8 into a high-temperature burned gas which is fed to the heat exchanger 5.

The heat exchanger 5 is connected to a blower 13 which introduces fresh air from an air inlet port 11 communicating with the interior of the passenger compartment of a vehicle into the heat exchanger 5, in which the air is heated by the burnt gas from the heating burner 4, and delivers the hot air from the heat exchanger 5 to an air outlet port 12. The air outlet port 12 communicates with a heater core 14 to which engine-cooling water is fed. The core 14 is provided as another source for heating the interior of the passenger compartment. A hot air sensor 15 serving as means for detecting the temperature and rate of flow of the hot air being discharged from the air outlet port 12 is positioned in the open end of the port. A blower 16, an air-conditioning evaporator 17, and a hot water duct 18 constitute a heater device which utilises engine cooling water.

A controller 19 for the heater comprises the main controller 191, which receives a generation signal GT from a generator 20 driven by the engine 1, an ON/OFF signal FS from an operation-controlling switch 21, a water temperature signal WS from a water temperature sensor 22 which detects the temperature of the engine cooling water, a start position signal ST, a rotation signal SM from a rotation-sensing switch 23a which detects rotation of a starter motor 23, a signal AS representing the accelerator opening, the vacuum signal BS from the vacuum sensor 31 disposed upstream of the heating burner 4, a load signal EL from an engine load sensor 24 which detects the load on the engine 1, the pressure signal NS from the fuel pressure sensor 94 which detects the fuel path pressure in the fuel inlet port of the fuel supply unit 9, an air temperature signal WA and an air rate signal WB from the hot air sensor 15 in the air outlet port 12, a heating signal WP from a heating position switch 25 which is operated by the driver, an ignition plug temperature signal PS and a resistance signal PR from an ignition plug sensor 26 which detects the temperature and resistance of the ignition glow plug 8, and an atomiser plug temperature signal QS and a resistance signal QR from an atomiser glow plug sensor 30 which detects the temperature and resistance of the atomiser glow plug 61. The controller 19 further comprises a bridge circuit 192 for controlling the atomiser glow plug 61 at a temperature at which the fuel is atomised, a bridge circuit 193 for controlling the ignition glow plug 8 at a temperature at which the mixture of atomised fuel and air is ignited; and a switch assembly 194.

The main controller 191 comprises a computer having a processing unit, a memory, and an input/output interface.

The bridge circuit 192 includes a Wheatstone bridge comprising the resistor wire 62 for heating the atomiser glow plug 61 in one arm and three resistors in the other three arms, and further includes a comparator for detecting a balanced condition of the Wheatstone bridge and a relay which is operated by an output from the comparator. By energising and de-energising the resistor wire 62 through the relay, the bridge circuit 192 controls the atomiser glow plug 61 at a fuel atomising temperature such as about 500°C, for example. The bridge circuit 193 similarly includes a Wheatstone bridge comprising the resistor wire 81 for heating the ignition glow plug 8 in one arm and three resistors in the other three arms, and further includes a comparator for detecting a balanced condition of the Wheatstone bridge, and a relay which is operated by an output from the comparator. By energising and de-energising the resistor wire 81 through the relay, the bridge circuit 193 controls the ignition glow plug 8 at a temperature to ignite the mixture of atomised fuel and air.

The switch assembly 194 comprises a switch 194a for controlling the turning on and off of the blower 13, a switch 194b for controlling the power supply to the bridge circuit 192, a switch 194c for controlling the power supply to the bridge circuit 193, a switch 194d for controlling the power supply to a lamp 27 for indicating completion of the preheating, and a switch 194e for controlling the power supply to a failure-indicating lamp 32. The control system of Fig. 1 also includes a power supply battery 28 and a key switch 29. The failure lamp 32, which acts as means for issuing a failure alarm, is energised when any of the ignition glow plug 8, the atomiser 6, the blower 13, the bypass valve 7, and the fuel valves A, B is subject to a failure.

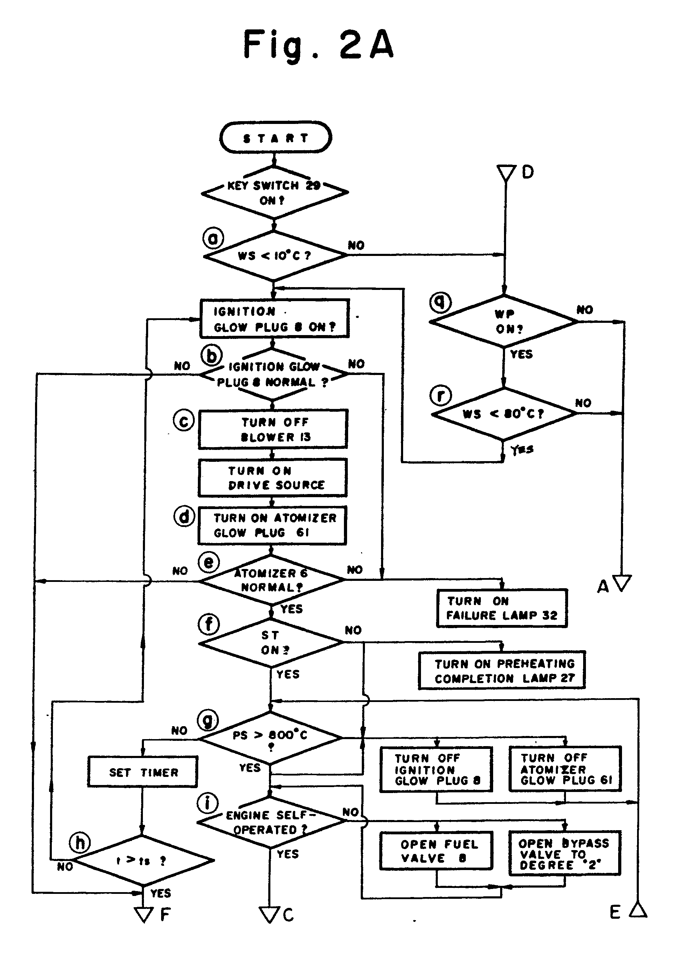

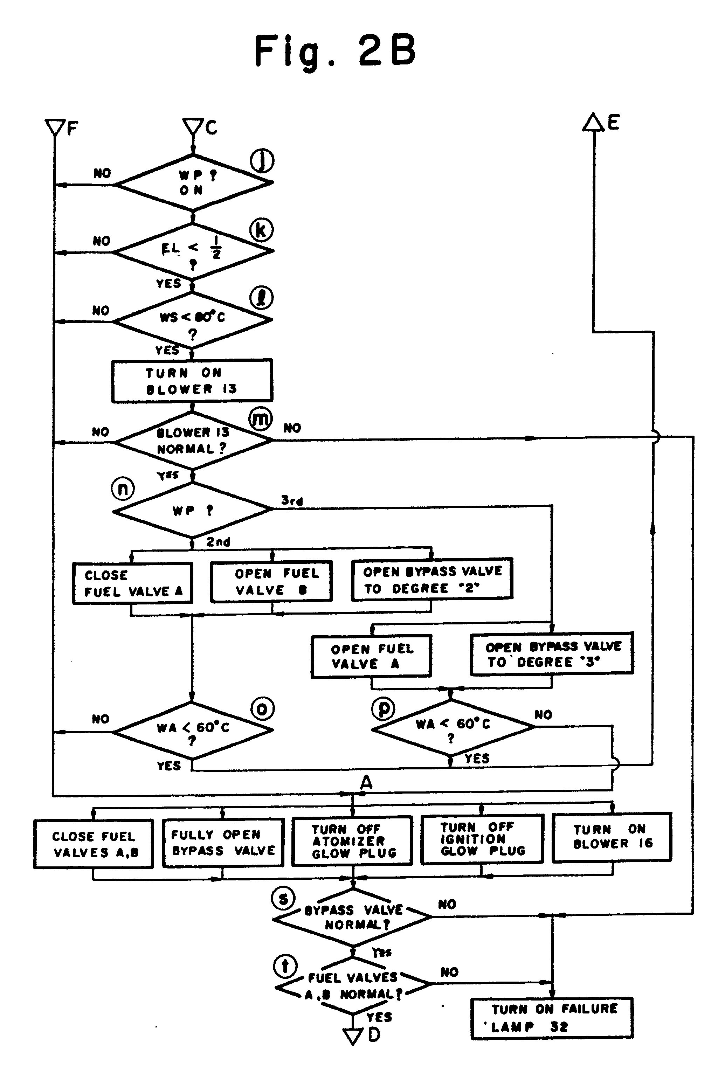

Referring also to Figs. 2A and 2B, an operation sequence of the control system of Fig. 1 for the fast-acting heating burner 4 will now be described. When the key switch 29 is turned on, electric power is supplied by the battery 28 to the main controller 191 and to other accessory circuits. The main controller 191 first determines in a step a (Fig.2A) whether the cooling water temperature indicated by the water temperature signal WS from the water temperature sensor switch 22 has reached 10°C. If the cooling water temperature is below 10°C, then the heating burner 4 is put into operation as a device for assisting starting of the engine 1. The main controller 191 closes the switch 194c to enable the bridge circuit 193 to energise the ignition glow plug 8. If the energisation of the ignition glow plug 8 is judged in a step b as being normal based on the resistance signal $\overline{PR}$ from the

ignition plug sensor 26, then control goes to a step c which turns off the switch 194a to de-energise the blower 13. The main controller 191 then applies a command to the drive source 93 for the fuel supply unit 9 to operate the fuel valve A to supply fuel to the atomiser 6. Then, the switch 194b is closed to enable the bridge circuit 192 to energise the atomiser glow plug 61 in a step d . On the other hand, if the energisation of the ignition glow plug 8 is judged in the step b as being abnormal, based on the resistance signal $\overline{PR}$ from the ignition plug sensor 26, then the switch 194e is closed to energise the failure lamp 32 to give a failure alarm and operation of the heating burner 4 is stopped.

When the atomiser glow plug 61 has been energised in the step d , if the resistance signal $\overline{QR}$ from the atomiser plug sensor 30 is normal in a step e , then control proceeds to a step f . If, on the other hand, the atomiser glow plug 61 is broken, for example, the resistance signal $\overline{QR}$ indicates a failure, and the switch 194e is closed to energise the failure lamp 32 to give a failure alarm, and operation of the heating burner 4 is stopped.

The step f checks the start position signal $\overline{ST}$ from the key switch 29. If the key switch 29 is in a START position, then the above operation is continued. If the key switch 29 is in the ON position, but not in the START position, then the switch 194d is closed for a few seconds to energise lamp 27, indicating to the driver that preheating is completed. Then, the atomiser glow plug 61 and the ignition glow plug 8 are de-energised.

If the key switch 29 is in the START position, thus energising the starter motor 23 and causing it to rotate, the rotation signal SM from the rotation switch 23a is received by the main controller 191, which checks the temperature of the ignition glow plug 8 in a step g . More specifically, when the bridge circuit 193 is energised, the temperature of the ignition glow plug 8 is kept at a prescribed temperature, for example about 800°C. If the fuel in the heating burner 4 is burnt sufficiently, the temperature in the burner 4 will be higher than the above-prescribed temperature, and can be detected by checking the resistance of the resistor wire 81 which has a positive temperature coefficient. The plug temperature signal PS from the ignition plug sensor 26, which has such a temperature detecting capability, is applied to the main controller 191. If the detected temperature of the ignition glow plug 8 is higher than 800°C, then the main controller 191 determines that the fuel combustion in the burner 4 is sufficient, and causes the switches 194c and 194b to de-energise the ignition glow plug 8 and the atomiser glow plug 61, respectively. If the detected temperature of the ignition glow plug 8 is lower than 800°C, then a program timer in the main controller 191 is set. If the timer has not reached a predetermined time ts in a step h , then control returns to the routine to energise the ignition glow plug 8 for supplying fuel and energising the atomiser glow plug 61 to burn the fuel again. If the condition in which the temperature of the ignition glow plug 8 is below 800°C continues for the time ts, then the operation of the burner 4 is interrupted.

If the temperature of the ignition glow plug 8 is higher than 800°C, control goes from the step g to a step i which ascertains whether engine 1 operates by itself. If not, then the main controller 191 opens the fuel valve B which supplies a larger amount of fuel and also opens the bypass valve 7 to the setting "2" to supply an increased amount of air, so that fuel combustion is increased to deliver a larger amount of hot air to assist starting of the engine 1. If the engine operates by itself, a step j (Fig.2B) checks the position indicated by the heating signal WP from the heating position switch 25. If the heating signal WP is ON, a step k checks the load signal EL from the load sensor 24 to check the load on the engine 1. If the engine load is light or smaller than 1/2 and the water temperature signal WS from the water temperature switch 22 is higher than 80°C in a step l , then the main controller 191 enables the switch 194a to energise the blower 13 to deliver hot air from the heat exchanger 5 through the air outlet port 12 into the passenger compartment to start heating the interior thereof. If the air rate signal WB from the hot air sensor 15 indicates an abnormal condition, the main controller 191 determines that the blower 13 or its associated system is subject to a failure in a step m , and causes energisation of the lamp 32 to give a failure indication and operation of the heating burner 4 is stopped. If the heating signal WP is OFF in the step j , or if the engine load is greater than 1/2 in the step k , or if the cooling water temperature is higher than 80°C in the step l , then the fuel valves A and B are closed in order to stop the operation of the heating burner 4, the bypass valve 7 is fully opened to allow air to bypass the heating burner, and the atomiser glow plug 61 and the ignition glow plug 8 are de-energised. If the temperature of the cooling water is higher than 80°C, then the conventional heater system utilising the cooling water can be used, and the blower 16 is energised to get the conventional heater system into operation.

If the heating signal WP from the heating position switch 25 indicates a second position in a step n after the hot air from the heat exchanger 5 has started heating the interior of the passenger compartment, the fuel valve A is closed and the fuel valve B is opened to increase the amount of fuel burnt, and the bypass valve 7 is opened to the degree "2" to increase the amount of air, so that the amount of fuel combustion is increased. If the heating signal WP indicates a third position in the step n , then both of the fuel valves A, B are opened and the bypass valve 7 is opened to the degree "3" for thereby increasing the amount of fuel combustion to generate a larger amount of heat.

If the hot air signal WA from the hot air sensor 15 which detects the temperature of the hot air from the air outlet port 12 indicates a temperature higher than 60°C in a step o or p , then the fuel valves A and B are closed to stop the operation of the heating burner 4, the bypass valve 7 is fully opened, and the atomiser glow plug 61 and the ignition glow plug 8 are de-energised. If the hot air signal WA indicates a temperature lower than 60°C in the step o or p and upon elapse of a prescribed period of time, then control returns to the step g to check the temperature of the ignition glow plug 8 for the burning condition in the quick heating burner 4, followed by the respective routines described above.

If the water temperature signal WS indicates a temperature higher than 10°C in the step a , the heating signal WP is checked in a step g . If the heating temperature WP is ON or indicates a heating position, then the water temperature signal WS is checked in a step r . If the cooling water temperature is lower than 80°C, then control goes into the routine (from the answer YES of the step a ) for operating the heating burner 4. If the heating signal WP is not in the heating position in the step q or if the water temperature signal WS indicates a cooling water temperature higher than 80°C in the step r , then operation of the fast-acting heating burner 4 is not necessary, and the combustion in the burner 4 is stopped.

Upon release of a given period of time, control proceeds to a point D (Fig.2B) for detecting the heating signal WP, during which time operation of the bypass valve 7 is detected in a step s and operation of the fuel valves A and B is detected in a step t .

The step s ascertains whether the bypass valve 7 is opened or closed on the basis of the vacuum signal BS from the vacuum sensor 31. If the bypass valve 7 operates normally under a command from the main controller 191, the vacuum signal BS is commensurate with the opening of the bypass valve 7. If the vacuum signal BS indicates an abnormal condition, the main controller 191 closes the switch 194e to energize the failure lamp 32.

The step t detects operation of the fuel valves A and B based on the pressure signal NS from the fuel pressure sensor 94 in the fuel supply unit 9. If the fuel valves A and B operate normally, the pressure signal NS is proportional to the opening of these fuel valves and gives a basis for ascertaining whether the fuel valves are functioning normally. If the pressure signal NS is indicative of an abnormal condition, the failure lamp 32 is energised to give a failure alarm.

If the bypass valve 7 and the fuel valves A and B are normal, then control goes to the point D from which it proceeds to the step q for checking the heating signal WP from the heating position switch 25.

If the above embodiment, the fast-acting heating burner 4 and the heat exchanger 5 are disposed in the intake pipe 3 of the petrol or diesel engine. However, the heating burner may be separated from the intake pipe of the engine, and hot air from the heat exchanger may be introduced directly into the passenger compartment for heating the interior thereof. For example, the heating burner may be positioned outside the engine compartment and placed below the driver's seat. If a trailer is towed by the vehicle, the heating burner may be disposed beneath the floor of the trailer.

Although a certain preferred embodiment has been shown and described, it should be understood that many modifications may be made therein. As an example, failure of the fuel valves may be detected by means for sensing a change in the temperature of the atomiser glow plug.

## Claims

1. A control system for a fast-acting heater which includes a heating burner (4) in which fuel is atomised in an electrically heated atomiser glow plug (61), air is mixed with the atomised fuel and the mixture is ignited by an electrical ignition plug (8) so that the mixture is burnt, and a heat exchanger (5) for extracting heat from the burnt mixture, the control system comprising operation sensing means (15,26,30,31,94) for sensing the operation of the burner and the heat exchanger to generate signals representing the operation; and means (19) for arresting the operation of the heater, if so required, in response to the signals from the operation sensing means; characterised in that the sensing means includes

means (26,30) for detecting the electric resistance of the atomizer glow plug (61) or of the ignition plug (8) and generating a signal (QR,PR) indicating the detected electric resistance; and

means (191) for determining a fault condition of the atomizer glow plug (61) or of the ignition plug (8) based on the signal (QR,PR) from the detecting means and arresting the operation of the heater based on the result of a determination made by the means for determining a fault condition of the atomizer glow plug or of the ignition plug.

2. A control system according to claim 1, further including alarm means (32) for generating an alarm based on the result of a determination made by the means (19) for determining a fault condition of the atomizer glow plug (61) or of the ignition plug (8).

## Revendications

1. Système de commande pour un dispositif de chauffage à action rapide qui comporte un brûleur de chauffage (4) dans lequel du carburant est atomisé dans une bougie de chauffage (61) qui provoque électriquement le chauffage et la pulvérisation, de l'air qui est mélangé au carburant atomisé et le mélange est enflammé par une bougie d'allumage électrique (8) de telle sorte que le mélange soit brûlé, ainsi qu'un échangeur de chaleur (5) pour extraire de la chaleur du mélange brûlé, le système de commande comprenant un moyen de détection de fonctionnement (15, 26, 30, 31, 94) pour détecter le fonctionnement du brûleur et de l'échangeur de chaleur afin de générer des signaux représentatifs de ce fonctionnement ; et un moyen (19) pour arrêter le fonctionnement du dispositif de chauffage si nécessaire, en réponse aux signaux provenant du moyen de détection de fonctionnement ; caractérisé en ce que le moyen de détection comprend :

- un moyen (26, 30) pour détecter la résistance électrique de la bougie de chauffage du pulvérisateur (61) ou de la bougie d'allumage (8) et permettant de générer un signal (QR, PR) qui indique la résistance électrique détectée ; et

- un moyen (191) pour déterminer une condition de panne de la bougie de chauffage du pulvérisateur (61) ou de la bougie d'allumage (8), basé sur le signal (QR, PR) issu du moyen de détection et permettant d'arrêter le fonctionnement du dispositif de chauffage sur la base du résultat d'une détermination réalisée par le moyen permettant de déterminer une condition de panne de la bougie de chauffage du pulvérisateur ou de la bougie d'allumage.

2. Système de commande selon la revendication 1, comportant en outre un moyen d'alarme (32) pour générer une alarme sur la base du résultat d'une détermination réalisée par le moyen (19) qui permet de déterminer une condition de panne de la bougie de chauffage du pulvérisateur (61) ou de la bougie d'alluma-ge (8).

**Ansprüche**

1. Eine Kontrolleinrichtung für eine schnell wirkende Heizung, die einen Heizbrenner (4), in dem Kraftstoff in einer elektrisch beheizten Vernebelungsglühkerze (61) vernebelt wird, Luft mit dem vernebelten Kraftstoff vermischt und die Mischung durch eine elektrische Zündkerze (8) gezündet wird, so daß die Mischung verbrannt wird, und einen Wärmetauscher (5) zur Gewinnung von Wärme aus der abgebrannten Mischung einschließt, wobei die Kontrolleinrichtung Betriebssensormittel (15, 26, 30, 31, 94) zur Feststellung des Betriebes des Brenners und des Wärmetauschers zur Erzeugung von Signalen, die den Betrieb repräsentieren, und Mittel zum Anhalten des Betriebes der Heizung im Bedarfsfall in Abhängigkeit von den Signalen von den Betriebssensormitteln umfaßt, dadurch **gekennzeichnet,** daß die Sensormittel
   Mittel (26, 30) zur Feststellung des elektri-schen Widerstandes der Vernebelungsglühker-ze (61) oder der Zündkerze (8) und zur Erzeugung eines Signales (QR, PR), das den festgestellten elektrischen Widerstand anzeigt, und
   Mittel (191) zur Festlegung einer Fehlerbedingung der Vernebelungsglühkerze (61) oder der Zündkerze (8) auf der Grundlage des Signals (QR, PR) von den Feststellungsmitteln und zur Beendigung des Betriebes der Heizung auf der Grundlage des Ergebnisses der Festlegung einschließt, die durch die Mittel zur Festlegung einer Fehlerbedingung der Vernebelungsglühkerze oder der Zündkerze festgelegt worden ist.

2. Kontrolleinrichtung nach Anspruch 1, die außerdem Alarmmittel (32) zur Erzeugung eines Alarms auf der Grundlage des Ergebnisses einer Festlegung einschließt, die durch die Mittel (19) zur Festlegung einer Fehlerbedingung der Vernebelungsglühkerze (61) oder der Zündkerze (8) festgelegt worden ist.

# Fig. 1

# Fig. 2A

```
                    ┌──────────────┐
                    │   START      │
                    └──────────────┘
                           │
                    ╱─────────────╲
                   ╱  KEY SWITCH 29 ╲
                   ╲     ON ?       ╱
                    ╲─────────────╱
                           │
              ⓐ    ╱─────────────╲        NO
                   ╱  WS < 10°C ? ╲──────────────────►  ▽ D
                   ╲─────────────╱
                           │
            ┌──────────────────────────┐
            │   IGNITION                │
            │   GLOW PLUG 8 ON?         │
            └──────────────────────────┘
              ⓑ  NO ╱──────────────╲ NO
           ◄────────╱ IGNITION GLOW  ╲────────────►
                    ╲ PLUG 8 NORMAL ?╱
                     ╲──────────────╱
              ⓒ    ┌──────────────┐
                   │   TURN OFF    │
                   │   BLOWER 13   │
                   └──────────────┘
                   ┌──────────────┐
                   │   TURN ON     │
                   │   DRIVE SOURCE│
                   └──────────────┘
              ⓓ    ┌──────────────┐
                   │ TURN ON ATOMIZER│
                   │ GLOW PLUG 61    │
                   └──────────────┘
              ⓔ  NO ╱──────────────╲ NO
           ◄────────╱  ATOMIZER 6    ╲────────────►
                    ╲   NORMAL?      ╱
                     ╲──────────────╱
                           │ YES
              ⓕ         ╱─────────╲  NO
                        ╱   ST      ╲────────►
                        ╲   ON ?    ╱
                         ╲─────────╱
                           │ YES
              ⓖ  NO  ╱──────────────╲
           ◄─────────╱  PS > 800°C   ╲
                     ╲     ?         ╱
                      ╲──────────────╱
                           │ YES
              ⓘ        ╱──────────────╲  NO
                       ╱ ENGINE SELF─   ╲──────►
                       ╲  OPERATED ?    ╱
                        ╲──────────────╱
                           │ YES
```

ⓠ  WP ON?  NO

YES

ⓡ  WS < 80°C?  NO

YES

TURN ON
FAILURE LAMP 32

A ▽

TURN ON PREHEATING
COMPLETION LAMP 27

TURN OFF
IGNITION
GLOW PLUG 8

TURN OFF
ATOMIZER
GLOW PLUG 61

SET TIMER

OPEN FUEL
VALVE 8

OPEN BYPASS
VALVE TO
DEGREE "2"

ⓗ  t > ts ?   NO

YES

▽ F

▽ C

E △

# Fig. 2B